# EUROPEAN PATENT SPECIFICATION

(11) **EP 3 241 696 B1**
(45) Date of publication and mention of the grant of the patent: **03.04.2019**
(21) Application number: 16305522.1
(22) Date of filing: 04.05.2016
(51) Int. Cl.: B60J 1/00, B60J 1/08, B61D 25/00

(54) **WINDOW MODULE, VEHICLE BODY, METHODS FOR MANUFACTURING A VEHICLE BODY AND FOR REPLACING A GLAZING OF A VEHICLE BODY**
FENSTERMODUL, FAHRZEUGKAROSSERIE, VERFAHREN ZUR HERSTELLUNG EINER FAHRZEUGKAROSSERIE UND ZUM ERSETZEN EINER VERGLASUNG EINER FAHRZEUGKAROSSERIE
MODULE DE FENÊTRE, CORPS DE VÉHICULE, PROCÉDÉS DE FABRICATION D'UNE CARROSSERIE DE VÉHICULE ET DE REMPLACEMENT D'UN VITRAGE D'UNE CARROSSERIE DE VÉHICULE

(43) Date of publication of application: 08.11.2017
(73) Proprietor: ALSTOM Transport Technologies, 93400 Saint-Ouen (FR)
(72) Inventor: UTHE, Bernd, 39397 Schwanebeck (DE)
(74) Representative: Lavoix

(56) References cited:
- EP-A2- 0 105 830
- DE-A1- 3 428 506
- GB-A- 2 047 784

## Description

The present invention relates to a window module for a vehicle body and to such a vehicle body. The present invention also relates to a method for manufacturing a vehicle body and a method for replacing a glazing of a vehicle body.

More specifically, the invention relates to implementing lateral windows on a body of a railway car.

It is well known in the art to secure a lateral glazing on a body of a railway car by direct bonding of glass on said body. In this case, the window is resistant to high loads and allows a relatively simple flush mounting. Direct bonding may also contribute to a good impermeability of the window. However, replacing the glazing of direct-bonded windows is relatively costly and requires a relatively long downtime. Some example of directly-bonded windows are disclosed in EP-A1-0 515 953, EP-A2-0241665, JP-A-2004 074 943 and EP-A1-0 064 583. In EP-A1-0 515 953, the glazing is bonded to a metal frame which is itself secured to the wall of the vehicle body.

It is also known in the art to secure a lateral glazing on a body of a railway car by clamping said glazing on rubber profiles mounted on said body. This method allows quick mounting and dismounting of said glazing. Nevertheless, clamped windows are less resistant to stresses and loads than the direct-bonded windows, and less impermeable. An example of this method is disclosed in DE-A1-19541270.

DE 3 428 506 A1 discloses several embodiments of a window assembly for a vehicle, including a glazing with two panes, separated with a separator profile. A profile strip is provided around the panes so as to adapt the panes to an existing window opening.

GB 2 047 784 A discloses a double-glazed window pane mounted within a frame by an adhesive. The joint between two adjacent double-glazed window panes is covered by a metal strip secured to the frame by studs attached to the strip. On the outside of the window, a rubber cover is fitted over the strip for forming a waterproof seal.

One of the aims of the invention is to solve these drawbacks by proposing a new window module, for a vehicle body, which is both easy to mount on the vehicle body and to replace, while being resistant to loads.

To this end, the invention relates to a window module according to claim 1.

The outer pane being secured to the frame with the first bonding agent, the connection of the glazing to the frame is of high resistance to loads and has a high impermeability. Removing the glazing only requires severing one bonding agent and dismantling the clamping seal system. A replacement glazing may be mounted on the frame by clamping the inner pane into the clamping seal system, which guarantees adequate and easy positioning of the replacement glazing relative to the frame before bonding. Bonding the outer pane to the frame guarantees high resistance of the window module.

Further advantageous and optional aspects of the invention are defined in claims 2 to 7.

The invention further relates to a vehicle body according to claim 8.

Further advantageous and optional aspects of the invention are defined in claim 9.

The invention further relates to a method for manufacturing according to claim 10.

Further advantageous and optional aspects of the invention are defined to claim 11 or 12.

The invention further relates to a method for replacing a glazing according to claim 13.

Further advantageous and optional aspects of the invention are defined in claim 14.

Other aspects and advantages of the invention will appear upon reading the following description, given by way of example and made in reference to the appended drawing in which:
- figure 1 is a partial transversal section of a vehicle body of the invention;
- figures 2, 3 and 4 are transversal sections similar to figure 1, depicting successive steps of a method for manufacturing the vehicle body of figure 1, according to the invention; and
- figures 5, 6, 7 and 8 are transversal sections similar to figures 1 to 4, depicting successive steps of a method for replacing a glazing of the vehicle body of figures 1 to 4, according to the invention.

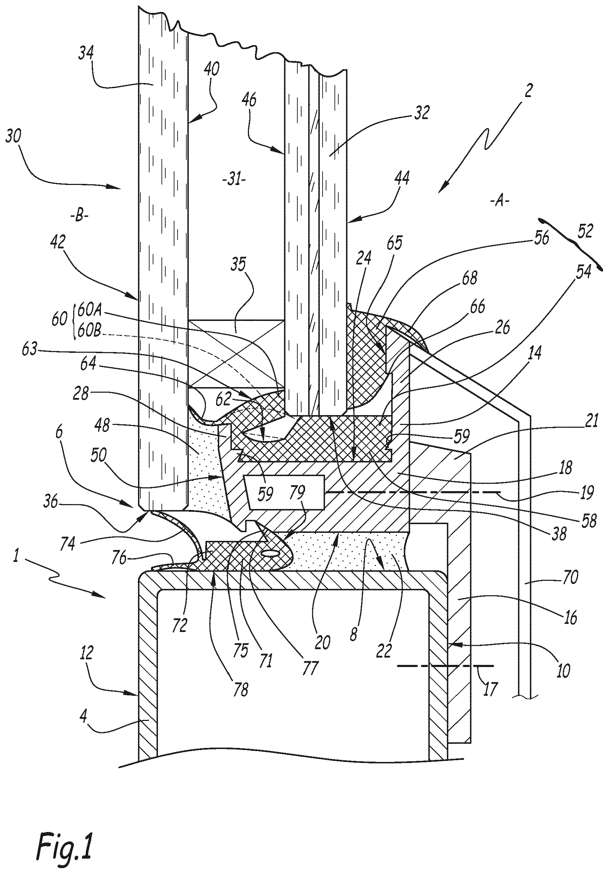

Figures 1 to 8 only depict a transversal section of the vehicle body 1, showing the vicinity of the periphery of a window module 2 of the vehicle body 1. It is to be understood that the following description may apply for the entire periphery of the window module 2, or at least a part of said periphery.

In the following description, the term "inner" refers to a direction oriented towards the inner space A of the vehicle body 1, while "outer" refers to an opposite direction oriented towards the outside B of the vehicle body. On figures 1 to 8, the inner space A of the vehicle body 1 is shown on the right while the outside B is shown on the left.

In the following description, the terms "internal" and "inwards" refer to a direction oriented to the center of the window module 2, while "external" and "outwards" refer to an opposite direction. On figures 1 to 8, the "internal" and "inwards" are directed to the top, while "external" and "outwards" are directed to the bottom.

In a manner known per se, the vehicle body 1 comprises a body wall 4, in which a window opening 6 is provided. The window opening 6 is delimited by an internal edge surface 8 of substantially rectangular shape, for accommodating the window module 2 of corresponding shape. In a manner known per se, other shapes than rectangular can be provided. The body wall 4 and the window module 2 separate the inner space A of the vehicle body 1 and the outside B of the vehicle body 1. Preferably, the part of the body wall 4 depicted on the figures is a side wall of a railway car, in particular for a passenger train. By "side wall", it is meant a wall parallel to the main movement direction of the vehicle. However, the following description may apply to a window module adapted for another part of a vehicle body. The body wall 4 comprises an inner outline face 10 surrounding the window opening 6. An opposed outer outline face 12 of the body wall 4 surrounds the window opening 6.

The window module 2 comprises a frame 14, defining the outline of the window module 2. The frame 14 is preferably mainly made of aluminum, by means of which the window module 2 is mounted into the window opening 6. Any other suitable material may be used instead of aluminum.

The frame 14 comprises an external flange 16 which is secured to the inner outline face 10 by means of fasteners 17 such as screws, rivets or the like, symbolized by a dashed line on the figures. The external flange 16 extends all around the periphery of the window opening 6, or at least a part of it, for partly recovering a portion of the inner outline face 10.

The frame 14 also comprises a supporting rail 18 secured to the external flange 16, and extending inside the window opening 6 when the window module 2 is mounted therein. The supporting rail 18 is shaped to correspond to the internal edge surface 8 of the window opening 6. The supporting rail 18 comprises an external rest surface 20 facing the internal edge surface 8, at a distance of it and parallel to it. The supporting rail 18 is connected to an internal portion 21 of the external flange 16 by means of further fasteners 19, such as screws, rivets or the like. The external rest surface 20 is bounded to the internal edge surface 8 by means of a bonding agent 22 interposed therebetween. The bonding agent 22 extends on all the periphery of the supporting rail 18, thus forming a tight seal between the supporting rail 18 and the body wall 4, separating the inner space A from the outside B. The bonding agent 22 may be formed for example by a bond seal or preferably by a layer of glue.

Opposite to the external rest surface 20, the supporting rail 18 comprises an internal rest surface 24, substantially parallel to the external rest surface 20. The supporting rail 18 further comprises an inner wall 26 protruding inwardly from the internal rest surface 24, directed towards the inside of the window module 2. The inner wall 26 preferably extends all along the internal periphery of the frame 14, in a plane parallel to the body wall 4 when the window module 2 is mounted therein. The supporting rail 18 also comprises an outer wall 28 extending in a substantially parallel plane as the inner wall 26, at a distance from it separated by the internal rest surface 24. Thus, the cross-section of the supporting rail 18 is U-shaped. The inner wall 26 is shorter than the outer wall 28.

The window module 2 further comprises a glazing 30, which is a multilayer glazing. The glazing 30 is surrounded and supported by the supporting rail 18 at least on a part of an outline of the glazing 30. The glazing 30 comprises at least an inner pane 32, which is, in the illustrated example, made of two layers of glass separated by a foil. More generally, the inner pane 32 is made of glass, preferably safety glass. The inner pane 32 may comprise different components and/or different layers, in a manner known per se. The glazing 30 further comprises an outer pane 34 parallel to the inner pane 32. In the present example, the outer pane 34 is made of a single layer of glass. More generally, the outer pane 34 is made of glass, preferably safety glass. The outer pane 34 may comprise different components and/or different layers, in a manner known per se. The inner pane 32 and the outer pane 34 are extending parallel to each other and are separated by a spacer 35 of the glazing 30 interposed therebetween. Thus, a layer 31 of gas is provided between the panes 32 and 34. For example, the gas of the layer 31 comprises air. The glazing 30 may comprise a number of panes superior than two, arranged parallel to each other, depending on the application.

The outer pane 34 defines an inner face 40 in contact with the layer of gas 31 and an outer face 42 in contact with the outside B of the vehicle body 1. In a similar way, the inner pane 32 defines an inner face 44 in contact with the inner space A of the vehicle body 1, and an outer face 46 facing the outer face 42 and being in contact with the layer 31.

The glazing 30 is mounted within the frame 14. The outline of the panes 32 and 34 corresponds to the shape of the frame 14 and to the shape of the window opening 6. In particular, the shape of the panes 32 and 34 may be rectangular. The inner pane 32 is delimited by an external edge surface 38 forming the outline of said pane 32. In a similar way, the outer pane 34 is delimited by an external edge surface 36. As it is visible on figure 1, the external edge surface 36 overhangs the external edge surface 38. In other words, the outer pane 34 covers a larger area than the inner pane 32.

The glazing 30 is secured to the frame 14. For that purpose, the outer pane 34 is bonded to the outer wall 28 of the supporting rail 18 by means of a bonding agent 48, the bonding agent 48 extending between an outer face 50 of the outer wall 28 and the inner face 40 of the outer pane 34. The bonding agent 48 preferably extends along all the width of the outer face 50 and covers a corresponding distance of the face 40 starting from the external edge surface 36. The bonding agent 48 may be a bond seal and is preferably a layer of glue. Thus, the outer pane 34 covers and protects the frame 14 from the outside B of the vehicle body 1. The bonding agent 48 forms a tight seal between the outer pane 34 and the supporting rail 18.

Furthermore, the bonding agents 22 and 48 ensure a high resistance to loads of the window module 2.

The window module 2 further comprises a clamping seal system 52, which includes two separate parts, namely a supporting part 54 and a clamping part 56. The supporting part 54 and the clamping part 56 are preferably made of a rubber-type material, such as elastomer.

The supporting part 54 is secured within the supporting rail 18 around the inner periphery thereof by retaining claws 59 protruding from the walls 26 and 28. Any other suitable means for securing the supporting part 54 to the supporting rail 18 may be considered. The supporting part 54 comprises a base portion 58 interposed between the external edge surface 38 of the inner pane 32 and the internal rest surface 24 of the frame 14, between the walls 26 and 28. In this configuration, the internal rest surface 24 extends parallel to the external edge surface 38. The base portion 58 extends between the inner pane 32 and the frame 14 for supporting the glazing 30 around its periphery, in radial directions.

The supporting part 54 further comprises a snapping lip 60 integral with the base portion 58. The snapping lip 60 extends from an outer side of the base portion 58 towards an inner direction of the window module 2. The snapping lip 60 is elastically deformable and can take on an outwardly bent shape 60B, as depicted in dashed lines on figure 1. In its outwardly bent shape 60B, the snapping lip is retracted in a recess 62 provided in the base portion 58 under the lip 60. In the outwardly bent shape 60B, the lip 60 allows mounting on the glazing 30 onto the frame 14, the glazing 30 being moved in an inner direction relative to the frame 14 for mounting, as explained below. The snapping lip 60 can also take on a retaining shape 60A, depicted on figure 1. When in retaining shape 60A, the snapping lip 60 retains the inner pane 32 in an outer direction, by contact onto the outer face 46 thereof. The snapping lip 60 is configured to elastically snap back inwardly from the outwardly bent shape 60B to the retaining shape 60A. The snapping lip 60 defines a smooth internal profile surface 63 by means of which the snapping lip 60 may be pushed to the outwardly bent shape by the inner pane 32, when the inner pane 32 is moved towards the inner direction passing the snapping lip 60, for mounting. As soon as the inner pane 32 has passed the lip 60, said lip 60 elastically snaps back to the retaining shape 60A, so as to retain the inner pane 32 at an inner side of the lip 60.

The supporting part 54 further comprises an outer lip 64 integrally protruding from the base of the snapping lip 60, over the wall 28 and the bonding agent 48, in a substantially outer direction. The end of the outer lip 64 is in contact, preferably tight contact, with the inner face 40 of the outer pane 34 and internally covers the bonding agent 48.

The clamping part 56 is separate from the supporting part 54 and is interposed, preferably in a slightly compressed manner, between the inner face 44 of the inner pane 32 and an outer rest face 65 of the wall 26, substantially parallel to the inner face 44. The outer rest face 65 is preferably provided with retaining means of the clamping part 56 between the glazing 30 and the wall 26, such as a shouldering 66 or a claw. Thus, the inner pane 32 is clamped between on one side, the snapping lip 60 and, on the other side, the clamping part 56. Thus, the clamping seal system 52 constitutes a tight seal between the inner pane 32 and frame 14.

The clamping part 56 further comprises a curved overhang lip 68 protruding in a substantially inner and external direction for recovering the end of the wall 26 and an adjacent inner shell element 70, the inner shell element 70 covering and protecting the frame 14 from the inner space A.

The window module 2 further comprises a cover seal 72, made of a rubber-type material. The cover seal 72 comprises an anchor body 71 provided with a claw lip 75 directed inwardly and retained in a recess 77, provided in the external rest surface 20 of the supporting rail 18, opposite to the outer wall 28. An external surface 78 of the anchor body 71, opposed to the claw lip 75, rests against the internal edge surface 8 of the window opening 6. An internal end 79 of the anchor body 71 rests against the bonding agent 22. The cover seal 72 is also provided with an internal lip 74, integrally protruding from the anchor body 71 in a substantially outer and internal direction. The internal lip 74 is in contact with the external edge surface 36 of the outer pane 34. The cover seal 72 is further provided with an external lip 76, integrally protruding from the anchor body 71 in a substantially outer direction. The lip 76 is in contact with the internal edge surface 8 of the window opening 6. Thus, the cover seal 72 constitute means of protection of the two bonding agents 22 and 48 from the outside B of the vehicle body 1. The cover seal 72 can be easily replaced if worn out, especially in case it is worn out by chemical agents such as graffiti cleaning agents, while the bonding agents 22 and 48 remain protected by said seal 72.

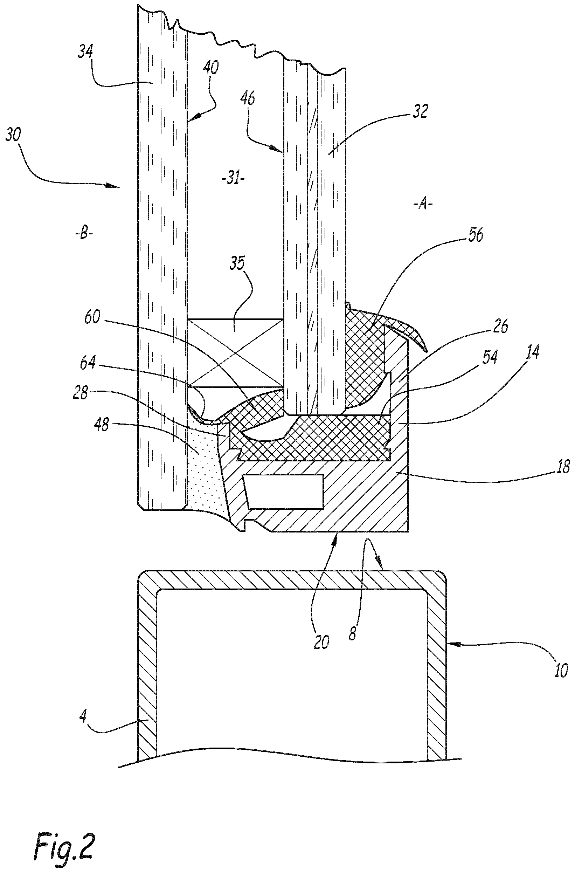

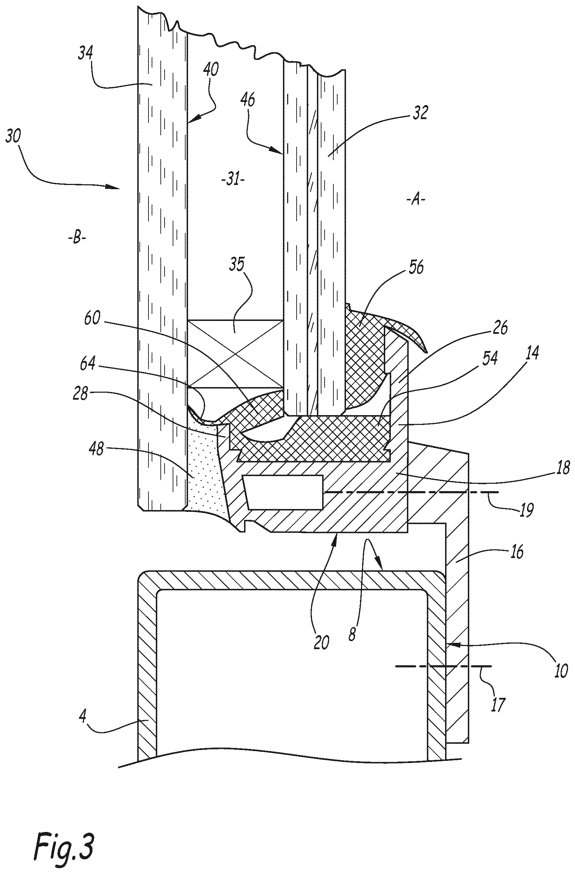

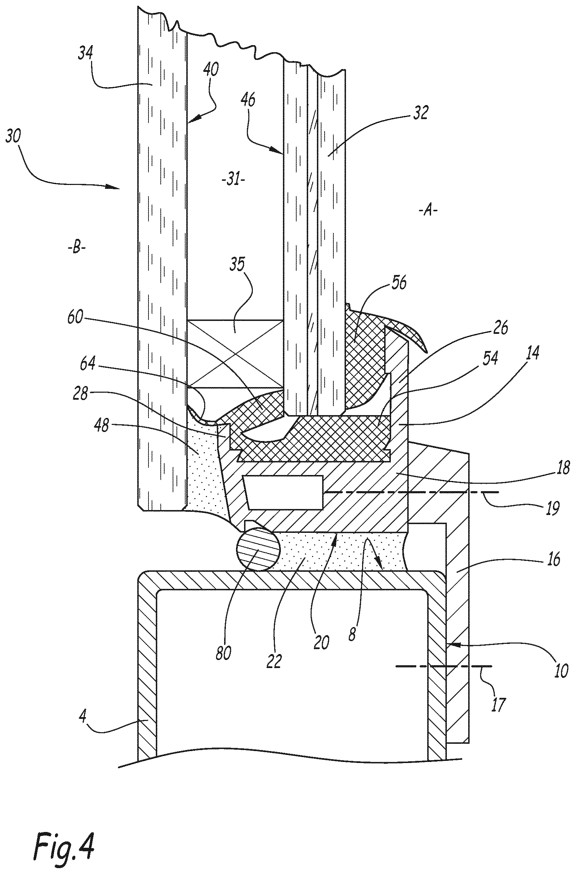

This window module 2 allows easy manufacturing of the vehicle body 1, since it can be provided as a pre-assembled module to be mounted into the window opening 6. Before mounting of the module 2 into the window opening 6, said module 2 is provided with already assembled glazing 30, frame 14 and clamping seal system 52, the outer pane 34 being already bonded to the frame 14 by means of the bonding agent 48, while the inner pane 32 is already clamped to the frame 14 by the clamping seal system 52. The provided window module 2 may then mounted as a unitary ensemble into the window opening 6, as depicted step by step on figures 2, 3 and 4. As depicted on figure 2, the window module 2 is first positioned within the window opening 6, devoid of cover seal 72 and devoid of external flange 16. Then, as depicted on figure 3, the external flange 16 is secured both to the body wall 4 and to the supporting rail 18 by means of the fasteners 17 and 19. The window module 2 being secured and adequately positioned by the fasteners 17 and 19, the bonding agent 22 can easily be applied between the supporting rail 18 and the internal edge surface 8 of the window opening 6, as depicted on figure 4, preferably without help of supplemental supporting or centering means. As visible on figure 4, before hardening of the bonding agent 22, a temporary shaping element 80 may be inserted between the glazing 30 and the internal edge surface 8 for shaping the outer side of said bonding agent 22 for making sure the shape of said bonding agent 22 corresponds to the shape of the internal end 79 of the cover seal 72. Once the bonding agent 22 is substantially hardened, the shaping element 80 is removed and the cover seal 72 is inserted, as depicted on figure 1, for covering and protecting the bonding agents 22 and 48.

For manufacturing the window module 2 itself, the following steps are performed. The supporting part 54 and a fresh bonding agent 48 are provided on the supporting rail 18. A glazing 30 is then mounted onto the supporting rail 18, by being moved in the inner direction, until the inner pane 32 which is moved pass the snapping lip 60, thus deforming said snapping lip 60 to the outwardly bent shape, in sliding over the smooth internal profile surface 63. Meanwhile, the outer pane 34 contacts and presses flat the fresh bonding agent 48. The glazing 30 is moved in the inner direction until snapping back of the snapping lip 60 to the retaining shape 60A. Before the bonding agent 48 is hardened, the clamping part 56 is mounted between the glazing 30 and the frame 14 as illustrated on figure 1.

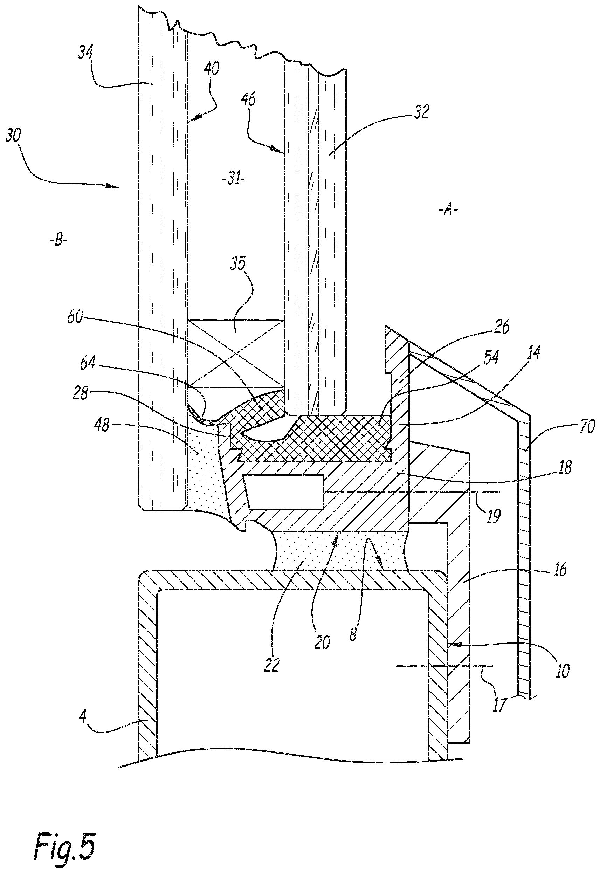

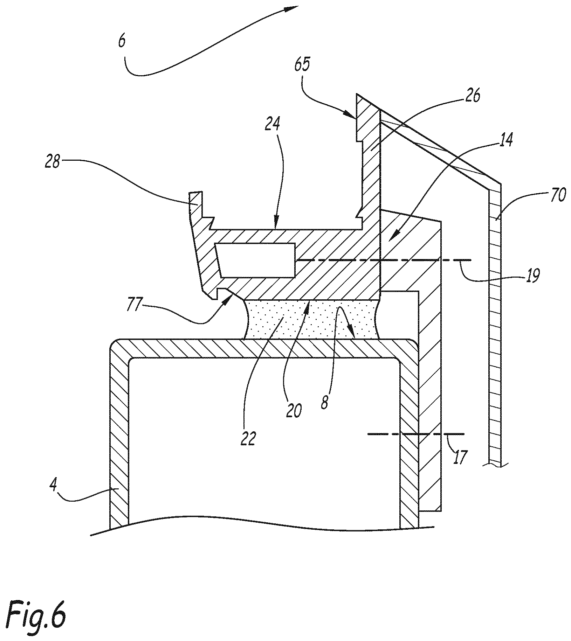

This window module 2 allows easy replacing of the glazing 30 while the window module 2 is mounted within the vehicle body 1. A method of replacing the glazing 30 is depicted step by step on figures 5, 6, 7 and 8. For replacing the glazing 30, said glazing 30 is to be separated from the frame 14 while said frame 14 remains mounted within the window opening 6. First, as depicted on figure 5, the cover seal 72 and the clamping part 56 of the clamping seal system 52 are removed from the module 2. Then, the bonding agent 48 is severed, for example by means of a cutting tool. Also, the snapping lip 60 of the base portion 58 of the clamping seal system 52 is cut, for example by means of a cutting tool. The free glazing 30 is then separated from the frame 14 in being moved away in the outer direction. The leftover material of the cut base portion 58 is then withdrawn from the supporting rail 18. As illustrated on figure 6, the frame 14 remains secured to the body 1, devoid of glazing.

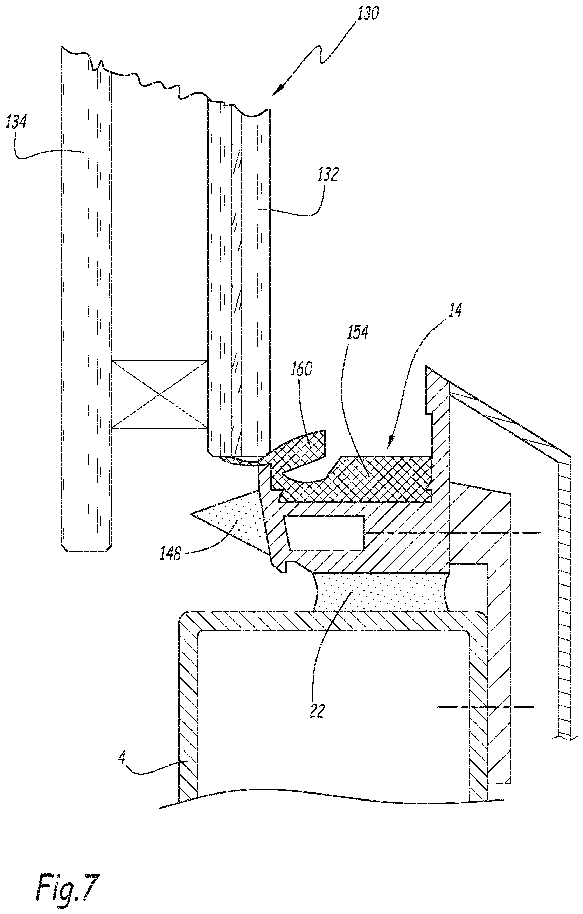

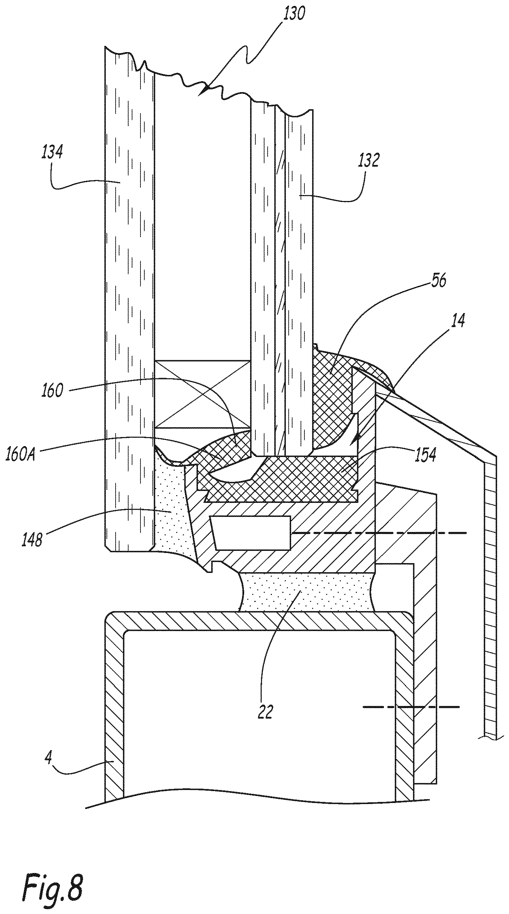

Subsequently, replacement elements can be set on the frame 14. These replacement elements are similar to the original elements and referenced with numbers increased of 100 on figures 7 and 8. For example, the replacement glazing is numbered 130, since it is similar to the original glazing 30.

As depicted on figure 7, a replacement supporting part 154 and a replacement bonding agent 148 are set for replacing respectively the original supporting part 54 and original bonding agent 48 on the frame 14. A replacement glazing 130 is then mounted onto the frame 14, being moved in the inner direction, until the replacement inner pane 132 is moved passed the replacement snapping lip 160, thus deforming said replacement snapping lip 160 to the outwardly bent shape. Meanwhile, the replacement outer pane 134 contacts and presses flat the fresh replacement bonding agent 148, as depicted on figure 8. The replacement glazing 130 is moved in the inner direction until snapping back of the replacement snapping lip 160 to the retaining shape 160A as depicted on figure 8. Before the replacement bonding agent 148 is hardened, the clamping part 56, or a similar replacement clamping part, is mounted between the replacement glazing 130 and the frame 14. The cover seal 72, or a similar replacement cover seal, is mounted between the replacement glazing 130 and the body wall 4.

The features of each above-described alternative embodiment of the invention may be implemented in any other above-described alternative embodiment of the invention, insofar as technically possible.

## Claims

1. A window module (2) for a vehicle body (1), the window module comprising :
- a frame (14), adapted for being mounted into a window opening (6) provided in the vehicle body, and
- a glazing (30), comprising at least an inner pane (32) and an outer pane (34), wherein the outer pane is bonded to the frame by means of a first bonding agent (48) and the window module (2) further comprises a clamping seal system (52), by means of which the inner pane (32) is clamped to the frame (14), **characterized in that** the clamping seal system (52) comprises a snapping lip (60), elastically deformable between:
- an outwardly bent shape (60B), in which the snapping lip allows mounting of the glazing (30) onto the frame (14), and
- a retaining shape (60A), in which the snapping lip retains the inner pane (32) by contact onto an outer face (46) thereof, the snapping lip being configured to elastically snap back inwardly to the retaining shape when the snapping lip is in outwardly bent shape.

2. The window module (2) according to claim 1, wherein
- in the outwardly bent shape, the snapping lip is bent in a direction oriented opposite to the center of the window module and in the retaining shape, the snapping lip is configured to snap back in a direction oriented to the center of the window module, and
- the snapping lip (60) comprises:
- an internal profile surface (63), by means of which the snapping lip (60) may be pushed to the outwardly bent shape (60B) by the inner pane (32), when the inner pane is moved in an inner direction so as to pass the snapping lip (60) for mounting, and
- an inner side at which the snapping lip (60) retains the inner pane (32).

3. The window module (2) according to any one of the previous claims, wherein the clamping seal system (52) comprises a clamping part (56) interposed between an inner face (44) of the inner pane (32) and an outer rest face (65) of the frame (14).

4. The window module (2) according to any one of the previous claims, wherein the clamping seal system (52) comprises an outer lip (64) resting onto an inner face (40) of the outer pane (34).

5. The window module (2) according to any one of the previous claims, wherein the clamping seal system (52) comprises a base portion (58) interposed between a first external edge surface (38) of the inner pane (32) and an internal rest surface (24) of the frame (14), substantially parallel to the first external edge surface.

6. The window module (2) according to any one of the previous claims, wherein the frame (14) comprises an external flange (16) which is adapted to be secured by means of fasteners (17) such as screws, rivets or the like, to an inner outline face (10) of the vehicle body (1), the inner outline face surrounding the window opening (6).

7. The window module (2) according to any one of the previous claims, wherein the window module comprises a cover seal (72) in contact with a second external edge surface (36) of the outer pane (34), the cover seal comprising an anchor body (71) retained by the frame (14).

8. A vehicle body (1), comprising at least one window opening (6) and a window module (2) according to any one of the previous claims, the window module being mounted within the window opening (6).

9. The vehicle body (1) according to claim 8, wherein an external rest surface (20) of the frame (14) is bonded to an internal edge surface (8) of the window opening (6) by means of a second bonding agent (22) interposed therebetween.

10. A method for manufacturing a vehicle body (1) according to any one of claims 8 or 9, the vehicle body comprising at least one window opening (6), the method comprising at least the following steps:
- a) providing a window module (2) comprising
∘ a frame (14), adapted to for being mounted into the window opening (6),
∘ a glazing (30), comprising at least an inner pane (32) and an outer pane (34), the outer pane being bonded to the frame by means of a first bonding agent (48), and
∘ a clamping seal system (52), by means of which the inner pane is clamped to the frame,
the frame, the glazing and the clamping seal system being pre-assembled, and
- b) mounting the provided window module into the window opening by securing the frame to the window opening.

11. The method for manufacturing according to claim 10, wherein step b) comprises at least the following sub-steps:
- b1) securing the window module (2) by means of an external flange (16) of the frame (14), with fasteners (17) such as screws, rivets or the like, to an inner outline face (10) of the vehicle body (1), the inner outline face surrounding the window opening (6), and
- b2) once the window module (2) is secured to the inner outline face, bonding an external rest surface (20) of the frame to an internal edge surface (8) of the window opening by means of a second bonding agent (22) interposed therebetween.

12. The method for manufacturing according to claim 11, wherein step b) further comprises the following sub-step : b3) interposing a cover seal (72) between the internal edge surface (8) and a second external edge surface (36) of the outer pane (34), the cover seal being positioned for covering the second bonding agent from an outside (B) of the vehicle body (1).

13. A method for replacing a glazing (30) of a vehicle body (1), **characterized in that** the vehicle body (1) is according to any one of claims 8 or 9, the method for replacing comprising:
- a step of separating the glazing (30) from the frame (14) while the frame remains mounted within the window opening (6), wherein the step of separating the glazing (30) from the frame (14) includes :
∘ severing the first bonding agent (48) and
∘ severing and/or dismantling the clamping seal system (52) at least in part,
wherein the method for replacing comprises the following further steps, performed after the step of separating:
∘ replacing at least a part of the dismantled clamping seal system (52),
∘ replacing the severed first bonding agent (48) by a replacement first bonding agent (148), and
∘ replacing the separated glazing (30) by a replacement glazing (130).

14. The method for replacing according to claim 13, **characterized in that**
- the step of replacing at least a part of the dismantled clamping seal system (52) includes setting a replacement supporting part (154) on the frame (14), similar to an original replacement supporting part of the dismantled clamping seal system (52), the replacement supporting part (154) including a replacement snapping lip (160) similar to the original snapping lip (160) of the dismantled clamping seal system (52) ; and
- the step of replacing the separated glazing (30) comprises mounting the replacement glazing (130) onto the frame (14), the replacement glazing (130) comprising a replacement inner pane (132) and a replacement outer pane (134), the step of replacing the separated glazing (30) including moving the replacement glazing (130) in an inner direction relative to the frame (14):
∘ until the replacement inner pane (132) is moved passed the replacement snapping lip (160), thus deforming said replacement snapping lip (160) to the outwardly bent shape, and until snapping back of the replacement snapping lip (160) to the retaining shape (160A); and
∘ so that, meanwhile, the replacement outer pane (134) contacts and presses flat the fresh replacement first bonding agent (148).

## Patentansprüche

1. Fenstermodul (2) für eine Fahrzeugkarosserie (1), wobei das Fenstermodul Folgendes umfasst:
einen Rahmen (14), der ausgelegt ist, um in eine Fensteröffnung (6) montiert zu sein, die in der Fahrzeugkarosserie bereitgestellt ist; und
eine Verglasung (30), umfassend mindestens eine innere Scheibe (32) und eine äußere Scheibe (34), wobei die äußere Scheibe mit Hilfe eines ersten Bindemittels (48) an den Rahmen gebunden ist, und das Fenstermodul (2) weiter ein Klemmverschlusssystem (52) umfasst, mit dessen Hilfe die innere Scheibe (32) an den Rahmen (14) geklemmt wird,
**dadurch gekennzeichnet, dass** das Klemmverschlusssytem (52) eine Schnapplippe (60) umfasst, die elastisch verformbar ist zwischen:
- einer nach außen gebogenen Form (60B), in der die Schnapplippe die Montage der Verglasung (30) auf den Rahmen (14) ermöglicht, und
- eine Rückhalteform (60A), in der die Schnapplippe die innere Scheibe (32) durch Kontakt auf einer äußeren Scheibe (46) davon zurückhält, wobei die Schnapplippe konfiguriert ist, um elastisch nach innen auf die Rückhalteform zurückzuschnappen, wenn sich die Schnapplippe in einer nach außen gebogenen Form befindet.

2. Fenstermodul (2) nach Anspruch 1, wobei
- in der nach außen gebogenen Form die Schnapplippe in eine Richtung gebogen ist, die entgegen dem Zentrum des Fenstermoduls ausgerichtet ist, und in der Rückhalteform die Schnapplippe konfiguriert ist, um in eine Richtung zurückzuschnappen, die auf das Zentrum des Fenstermoduls ausgerichtet ist, und
- die Schnapplippe (60) Folgendes umfasst:
- eine innere Profilfläche (63), mit deren Hilfe die Schnapplippe (60) in die nach außen gebogene Form (60B) durch die innere Scheibe (32) geschoben werden kann, wenn die innere Scheibe in eine innere Richtung bewegt wird, um die Schnapplippe (60) zur Montage zu passieren, und
- eine innere Seite, an der die Schnapplippe 60) die innere Scheibe (32) zurückhält.

3. Fenstermodul (2) nach einem der vorstehenden Ansprüche, wobei das Klemmverschlusssystem (52) einen Klemmteil (56) umfasst, der zwischen ein innere Seite (44) der inneren Scheibe (32) und einer äußeren Ruheseite (65) des Rahmens (14) gestellt ist.

4. Fenstermodul (2) nach einem der vorhergehenden Ansprüche, wobei das Klemmverschlusssystem (52) eine äußere Lippe (64) umfasst, die auf einer inneren Seite (40) der äußeren Scheibe (34) ruht.

5. Fenstermodul (2) nach einem der vorhergehenden Ansprüche, wobei das Klemmverschlusssystem (52) einen Basisabschnitt (58) umfasst, der zwischen eine erste äußere Kantenfläche (38) der inneren Scheibe (32) und eine innere Ruhefläche (24) des Rahmens (14) gestellt ist, im Wesentlichen parallel zur ersten äußeren Kantenfläche.

6. Fenstermodul (2) nach einem der vorhergehenden Ansprüche, wobei der Rahmen (14) einen äußeren Flansch (16) umfasst, der ausgelegt ist, um mit Hilfe von Befestigungsvorrichtungen (17) wie z. B. Schrauben, Nieten oder dergleichen an eine innere Umrissseite (10) der Fahrzeugkarosserie (1) gesichert zu werden, wobei die innere Umrissseite die Fensteröffnung (6) umgibt.

7. Fenstermodul (2) nach einem der vorhergehenden Ansprüche, wobei das Fenstermodul eine Deckeldichtung (72) umfasst, die in Kontakt mit einer zweiten äußeren Kantenfläche (36) der äußeren Scheibe (34) ist, wobei die Deckeldichtung einen Ankerkörper (71) umfasst, der vom Rahmen (14) zurückgehalten wird.

8. Fahrzeugkarosserie (1), umfassend mindestens eine Fensteröffnung (6) und ein Fenstermodul (2) nach einem der vorstehenden Ansprüche, wobei das Fenstermodul innerhalb der Fensteröffnung (6) montiert ist.

9. Fahrzeugkarosserie (1) nach Anspruch 8, wobei eine äußere Ruhefläche (20) des Rahmens (14) an eine innere Kantenfläche (8) der Fensteröffnung (6) mit Hilfe eines zweiten Bindemittels (22), das dazwischen gestellt ist, gebunden ist.

10. Verfahren zur Herstellung einer Fahrzeugkarosserie (1) nach einem der Ansprüche 8 oder 9, wobei die Fahrzeugkarosserie mindestens eine Fensteröffnung (6) umfasst, wobei das Verfahren mindestens die folgenden Schritte umfasst:
- a) Bereitstellen eines Fenstermoduls (2), umfassend:
- einen Rahmen (14), der ausgelegt ist, um in die Fensteröffnung (6) montiert zu werden,
- eine Verglasung (30), umfassend mindestens eine innere Scheibe (32) und eine äußere Scheibe (34), wobei die äußere Scheibe mit Hilfe eines ersten Bindemittels (48) an den Rahmen gebunden wird, und
- ein Klemmverschlusssystem (52), mit dessen Hilfe die innere Scheibe an den Rahmen geklemmt wird,
wobei der Rahmen, die Verglasung und das Klemmverschlusssystem im Voraus zusammengebaut werden, und
- b) Montieren des bereitgestellten Fenstermoduls in die Fensteröffnung durch Sichern des Rahmens an die Fensteröffnung.

11. Verfahren zur Herstellung nach Anspruch 10, wobei Schritt b) mindestens die Folgenden Unterschritte umfasst:
- b1) Sichern des Fenstermoduls (2) mit Hilfe eines äußeren Flansches (16) des Rahmens (14) mit Befestigungsvorrichtungen (17) wie z. B. Schrauben, Nieten oder dergleichen an eine innere Umrissseite (10) der Fahrzeugkarosserie (1), wobei die innere Umrissseite die Fensteröffnung (6) umgibt, und
- b2) nachdem das Fenstermodul (2) an die innere Umrissseite gesichert ist, Binden einer äußeren Ruhefläche (20) des Rahmens an eine innere Kantenfläche (8) der Fensteröffnung mit Hilfe eines zweiten Bindemittels (22), das dazwischen gestellt ist.

12. Verfahren zur Herstellung nach Anspruch 11, wobei Schritt b) weiter den Folgenden Unterschritt umfasst: b3) Stellen einer Deckeldichtung (72) zwischen die innere Kantenfläche (8) und eine zweite äußere Kantenfläche (36) der äußeren Scheibe (34), wobei die Deckeldichtung positioniert ist, um das zweite Bindemittel von einer Außenseite (B) der Fahrzeugkarosserie (1) abzudecken.

13. Verfahren zum Ersetzen einer Verglasung (30) einer Fahrzeugkarosserie (1), **dadurch gekennzeichnet, dass** die Fahrzeugkarosserie (1) nach einem der Ansprüche 8 oder 9 ist, wobei das Verfahren zum Ersetzen Folgendes umfasst:
- einen Schritt des Trennens der Verglasung (30) vom Rahmen (14), während der Rahmen innerhalb der Fensteröffnung (6) montiert bleibt, wobei der Schritt des Trennens der Verglasung (30) vom Rahmen (14) Folgendes umfasst:
- Ablösen des ersten Bindemittels (48) und
- Ablösen und/oder Zerlegen des Klemmverschlusssystems (52) mindestens teilweise, wobei das Verfahren zum Ersetzen die folgenden weiteren Schritte umfasst, durchgeführt nach dem Schritt des Trennens:
- Ersetzen mindestens eines Teils des zerlegten Klemmverschlusssystems (52),
- Ersetzen des abgelösten ersten Bindemittels (48) durch einen Ersatz des ersten Bindemittels (148), und
- Ersetzen der getrennten Verglasung (30) durch eine Ersatzverglasung (130).

14. Verfahren zum Ersetzen nach Anspruch 13, **dadurch gekennzeichnet, dass**
- der Schritt des Ersetzens mindestens eines Teils des zerlegten Klemmverschlusssystems (52) das Einstellen eines Ersatzstützteils (154) auf dem Rahmen (14) einschließt, ähnlich einem originalen Ersatzstützteil des zerlegten Klemmverschlusssystems (52), wobei der Ersatzstützteil (154) eine Ersatzschnapplippe (160) ähnlich der originalen Schnapplippe (160) des zerlegten Klemmverschlusssystems (52) einschließt; und
- der Schritt des Ersetzens der getrennten Verglasung (30) das Montieren der Ersatzverglasung (130) auf den Rahmen (14) umfasst, wobei die Ersatzverglasung (130) eine innere Ersatzscheibe (132) und eine äußere Ersatzscheibe (134) umfasst, wobei der Schritt des Ersetzens der getrennten Verglasung (30) das Bewegen der Ersatzverglasung (130) in einer inneren Richtung mit Bezug auf den Rahmen (14) umfasst:
- bis die innere Ersatzscheibe (132) an der Ersatzschnapplippe (160) vorbei bewegt ist, wodurch die Ersatzschnapplippe (160) in die nach außen gebogene Form verformt wird, und bis zum Zurückschnappen der Ersatzschnapplippe (160) in die Rückhalteform (160A); und
- so dass, in der Zwischenzeit, die äußere Ersatzscheibe (134) mit dem neuen ersten Bindemittel (148) in Kontakt kommt und dieses flach presst.

## Revendications

1. Module de fenêtre (2) pour une carrosserie de véhicule (1), le module de fenêtre comprenant :
un bâti (14) adapté pour être monté dans une ouverture de fenêtre (6) prévue dans la carrosserie de véhicule, et
un vitrage (30) comprenant au moins une vitre interne (32) et une vitre externe (34),
dans lequel :
la vitre externe est reliée au bâti au moyen d'un premier agent de liaison (48) et le module de fenêtre (2) comprenant en outre un système d'étanchéité de serrage (52) au moyen duquel la vitre interne (32) est fixée sur le bâti (14),
**caractérisé en ce que** le système d'étanchéité de serrage (52) comprend une lèvre d'encliquetage (60) élastiquement déformable entre :
une forme pliée extérieurement (60B) dans laquelle la lèvre d'encliquetage permet le montage du vitrage (30) sur le bâti (14), et
une forme de retenue (60A) dans laquelle la lèvre d'encliquetage retient la vitre interne (32) par contact sur sa face externe (46), la lèvre d'encliquetage étant configurée pour s'encliqueter élastiquement vers l'intérieur dans la forme de retenue lorsque la lèvre d'encliquetage est dans la forme pliée extérieurement.

2. Module de fenêtre (2) selon la revendication 1, dans lequel :
dans la forme pliée extérieurement, la lèvre d'encliquetage est pliée dans une direction orientée à l'opposé du centre du module de fenêtre et dans la forme de retenue, la lèvre d'encliquetage est configurée pour s'encliqueter dans une direction orientée vers le centre du module de fenêtre, et
la lèvre d'encliquetage (60) comprend :
une surface de profil interne (63) au moyen de laquelle la lèvre d'encliquetage (60) peut être poussée dans la forme pliée extérieurement (60B) par la vitre interne (32), lorsque la vitre interne est déplacée dans une direction interne afin de faire passer la lèvre d'encliquetage (60) pour le montage, et
un côté interne au niveau duquel la lèvre d'encliquetage (60) retient la vitre interne (32).

3. Module de fenêtre (2) selon l'une quelconque des revendications précédentes, dans lequel le système d'étanchéité de serrage (52) comprend une partie de serrage (56) intercalée entre une face interne (44) de la vitre interne (32) et une face d'appui externe (65) du bâti (14).

4. Module de fenêtre (2) selon l'une quelconque des revendications précédentes, dans lequel le système d'étanchéité de serrage (52) comprend une lèvre externe (64) s'appuyant sur une face interne (40) de la vitre externe (34).

5. Module de fenêtre (2) selon l'une quelconque des revendications précédentes, dans lequel le système d'étanchéité de serrage (52) comprend une partie de base (58) intercalée entre une première surface de bord externe (38) de la vitre interne (32) et une surface d'appui interne (24) du bâti (14) sensiblement parallèle à la première surface de bord externe.

6. Module de fenêtre (2) selon l'une quelconque des revendications précédentes, dans lequel le bâti (14) comprend une bride externe (16) qui est adaptée pour être fixée au moyen de fixations (17) telles que des vis, des rivets ou similaires, à une face de contour interne (10) de la carrosserie de véhicule (1), la face de contour interne entourant l'ouverture de fenêtre (6).

7. Module de fenêtre (2) selon l'une quelconque des revendications précédentes, le module de fenêtre comprenant un joint de couvercle (72) en contact avec une seconde surface de bord externe (36) de la vitre externe (34), le joint de couvercle comprenant un corps d'ancrage (71) retenu par le bâti (14).

8. Carrosserie de véhicule (1) comprenant au moins une ouverture de fenêtre (6) et un module de fenêtre (2) selon l'une quelconque des revendications précédentes, le module de fenêtre étant monté à l'intérieur de l'ouverture de fenêtre (6).

9. Carrosserie de véhicule (1) selon la revendication 8, dans laquelle une surface d'appui externe (20) du bâti (14) est reliée à une surface de bord interne (8) de l'ouverture de fenêtre (6) au moyen d'un second agent de liaison (22) intercalé entre elles.

10. Procédé pour fabriquer une carrosserie de véhicule (1) selon l'une quelconque des revendications 8 ou 9, la carrosserie de véhicule comprenant au moins une ouverture de fenêtre (6), le procédé comprenant au moins les étapes suivantes consistant à :
a) prévoir un module de fenêtre (2) comprenant :
un bâti (14) adapté pour être monté dans l'ouverture de fenêtre (6),
un vitrage (30) comprenant au moins une vitre interne (32) et une vitre externe (34), la vitre externe étant reliée au bâti au moyen d'un premier agent de liaison (48), et
un système d'étanchéité de serrage (52) au moyen duquel la vitre interne est fixée sur le bâti,
le bâti, le vitrage et le système d'étanchéité de serrage étant préassemblés, et
b) monter le module de fenêtre prévu dans l'ouverture de fenêtre en fixant le bâti à l'ouverture de fenêtre.

11. Procédé de fabrication selon la revendication 10, dans lequel l'étape b) comprend au moins les sous-étapes suivantes consistant à :
b1) fixer le module de fenêtre (2) au moyen d'une bride externe (16) du bâti (14), avec des fixations (17) telles que des vis, des rivets ou similaires, à une face de contour interne (10) de la carrosserie de véhicule (1), la face de contour interne entourant l'ouverture de fenêtre (6), et
b2) une fois que le module de fenêtre (2) est fixé sur la face de contour interne, relier une surface d'appui externe (20) du bâti à une surface de bord interne (8) de l'ouverture de fenêtre au moyen d'un second agent de liaison (22) intercalé entre elles.

12. Procédé de fabrication selon la revendication 11, dans lequel l'étape b) comprend en outre la sous-étape suivante consistant à : b3) intercaler un joint de couvercle (72) entre la surface de bord interne (8) et une seconde surface de bord externe (36) de la vitre externe (34), le joint de couvercle étant positionné pour recouvrir le second agent de liaison depuis un extérieur (B) de la carrosserie de véhicule (1).

13. Procédé pour remplacer un vitrage (30) d'une carrosserie de véhicule (1), **caractérisé en ce que** la carrosserie de véhicule (1) est selon l'une quelconque des revendications 8 ou 9, le procédé de remplacement comprenant :
une étape consistant à séparer le vitrage (30) du bâti (14) alors que le bâti reste monté à l'intérieur de l'ouverture de fenêtre (6), l'étape consistant à séparer le vitrage (30) du bâti (14) comprenant les étapes consistant à :
couper le premier agent de liaison (48), et
couper et/ou démonter le système d'étanchéité de serrage (52) au moins en partie,
le procédé de remplacement comprenant les étapes supplémentaires suivantes, réalisées après l'étape de séparation, consistant à :
remplacer au moins une partie du système d'étanchéité de serrage (52) démonté,
remplacer le premier agent de liaison (48) coupé par un premier agent de liaison de remplacement (148), et
remplacer le vitrage séparé (30) par un vitrage de remplacement (130).

14. Procédé de remplacement selon la revendication 13, **caractérisé en ce que** :
l'étape consistant à remplacer au moins une partie du système d'étanchéité de serrage (52) démonté comprenant l'étape consistant à placer une partie de support de remplacement (154) sur le bâti (14), similaire à une partie de support de remplacement d'origine du système d'étanchéité de serrage (52) démonté, la partie de support de remplacement (154) comprenant une lèvre d'encliquetage de remplacement (160) similaire à la lèvre d'encliquetage d'origine (160) du système d'étanchéité de serrage (52) démonté ; et
l'étape consistant à remplacer le vitrage (30) séparé comprend l'étape consistant à monter le vitrage de remplacement (130) sur le bâti (14), le vitrage de remplacement (130) comprenant une vitre interne de remplacement (132) et une vitre externe de remplacement (134), l'étape consistant à remplacer le vitrage (30) séparé comprenant l'étape consistant à déplacer le vitrage de remplacement (130) dans une direction interne par rapport au bâti (14) :
jusqu'à ce que la vitre interne de remplacement (132) soit déplacée au-delà de la lèvre d'encliquetage de remplacement (160), déformant ainsi ladite lèvre d'encliquetage de remplacement (160) dans la forme pliée extérieurement, et jusqu'à l'encliquetage de la lèvre d'encliquetage de remplacement (160) dans la forme de retenue (160A) ; et
de sorte que, en même temps, la vitre externe de remplacement (134) est en contact avec et comprime à plat le premier agent de liaison (148) de remplacement neuf.
